# EUROPEAN PATENT APPLICATION

(11) **EP 4 693 216 A1**
(43) Date of publication of application: **11.02.2026**
(21) Application number: 24223155.3
(22) Date of filing: 24.12.2024
(51) Int. Cl.: G06V 10/74, G06V 10/80, G06V 20/40, G06V 20/64, G06V 40/16, G10L 17/02, G10L 17/10, G10L 25/24, G10L 25/57

(54) **SPEAKER RECOGNITION METHOD AND APPARATUS, ELECTRONIC DEVICE, MEDIUM, AND PROGRAM PRODUCT**

(30) Priority: 09.08.2024 CN 202411098519
(71) Applicant: Wondershare Technology (Hunan) Co., Ltd., Changsha, Hunan 410205 (CN)
(72) Inventor: WANG, Cheng, Changsha, Hunan Province 410205 (CN)
(74) Representative: Santarelli

(57) **Abstract**

The present application provides a speaker recognition method and apparatus, an electronic device, a medium, and a program product, where the speaker recognition method includes: performing scene detection on a video to be recognized, and dividing the video to be recognized into a plurality of video segments based on a result of the scene detection; for each video segment in the plurality of video segments, separating the video segment to obtain audio data and video frames in the video segment; extracting facial features of the video frames and extracting an audio feature of the audio data; for a plurality of video frames with scene switching in the plurality of video segments, extracting face depth features of the plurality of video frames, and calculating a distance between the face depth features of adjacent video frames in the plurality of video frames, so as to obtain a cross-scene distance feature; and recognizing a speaker from faces included in the video segments based on the cross-scene distance feature, the facial features and the audio feature. Through the present disclosure, the speaker recognition is achieved scene by scene, and at the same time, the face association is achieved by combining cross-scene features so as to overcome the problem of poor accuracy of speaker recognition caused by scene switching.

## Description

### TECHNICAL FIELD

The present application relates to the technical field of audio and video processing and, in particular, to a speaker recognition method and apparatus, an electronic device, a medium, and a program product.

### BACKGROUND

Speaker recognition refers to automatic recognition of different speakers appearing in an audio or video, so as to divide the audio or video into a plurality of segments according to the different speakers. In a multi-person conversation scenario, quickly and accurately detecting the speakers and extracting the voice or video of a designated speaker has higher application value for scenes such as multimedia content creation, video customization, and mouth shape adjustment in different languages.

When recognizing the speakers in a multi-person conversation video, the entire video is generally considered as a whole in the related art, and the speakers in the video are recognized through the extraction and matching of visual and audio features. The inventor of the present application found during research that, in the multi-person conversation scenario, the speakers frequently switch or move within a certain period of time, resulting in poor continuity and integrity of the video, so that the method of recognizing the speakers by considering the entire video as a whole has poor accuracy.

Therefore, there is an urgent need to provide a speaker recognition scheme for the multi-person conversation video with high accuracy.

### SUMMARY

The present application provides a speaker recognition method and apparatus, an electronic device, a medium, and a program product, and by dividing a video through scene detection and performing speaker recognition segment by segment, an impact of scene switching on speaker recognition has been overcome. The speaker recognition is implemented by using matching result of audio features and extracted visual features from two dimensions including both the same scene and cross scene, thereby improving recognition accuracy.

According to a first aspect, the present application provides a speaker recognition method, including:
performing scene detection on a video to be recognized, and dividing the video to be recognized into a plurality of video segments based on a result of the scene detection;
for each video segment in the plurality of video segments, separating the video segment to obtain audio data and video frames in the video segment;
extracting facial features of the video frames and extracting an audio feature of the audio data;
for a plurality of video frames with scene switching in the plurality of video segments, extracting face depth features of the plurality of video frames, and calculating a distance between the face depth features of adjacent video frames in the plurality of video frames, so as to obtain a cross-scene distance feature; and
recognizing a speaker from faces included in the video segments based on the cross-scene distance feature, the facial features and the audio feature.

Optionally, the for the plurality of video frames with scene switching in the plurality of video segments, extracting the face depth features of the plurality of video frames, and calculating the distance between the face depth features of the adjacent video frames in the plurality of video frames so as to obtain the cross-scene distance feature, includes:
for the plurality of video frames with scene switching in the plurality of video segments, extracting the face depth features and histogram of oriented gradient features of face boxes of the plurality of video frames;
fusing the face depth feature and the histogram of oriented gradient feature of the same video frame to obtain a cross-scene fusion feature of the video frame; and
calculating a distance between the cross-scene fusion features of the adjacent video frames in the plurality of video frames, so as to obtain the cross-scene distance feature.

Optionally, the facial features are configured to describe features of the face boxes corresponding to the faces included in the video frames, and the recognizing the speaker from the faces included in the video segments based on the cross-scene distance feature, the facial features and the audio feature, includes:
determining a connection relationship of the same face box in the adjacent video frames with scene switching in the plurality of video segments based on the cross-scene distance feature, and determining a connection relationship of the same face box in the adjacent video frames in the same video segment based on the facial feature; where the connection relationship of the face box is configured to describe a position relationship of the same face box in different video frames;
for each face box in the video segments, obtaining facial features of the face box from the facial features of the video frames including the face box according to the connection relationship of the face box, and splicing the facial features of the face box in the video frames including the face box so as to obtain a facial feature matrix of the face box; and
recognizing the speaker from the faces included in the video segments based on the facial feature matrix and the audio feature.

Optionally, the determining the connection relationship of the same face box in the adjacent video frames with scene switching in the plurality of video segments based on the cross-scene distance feature, includes:
performing a Hungarian matching on the cross-scene distance feature of the adjacent video frames with scene switching in the plurality of video segments, so as to obtain the connection relationship of the same face box in the adjacent video frames with scene switching in the plurality of video segments.

Optionally, the facial features are configured to describe features of the face boxes corresponding to the faces included in the video frames. Before recognizing the speaker from the faces included in the video segments based on the cross-scene distance feature, the facial features, and the audio feature, the method further includes:
for a face box detected in each video segment, extracting lip key points of the face box from a video frame corresponding to the face box in the video segment;
calculating a lip offset of the face box in the video segment based on the lip key points of the face box in the video frame corresponding to the face box in the video segment; and
removing a face box with a lip offset less than a preset threshold value in the video segment, and taking remaining face boxes as candidate face boxes so as to recognize the speaker from the candidate face boxes.

Optionally, the extracting the audio feature of the audio data, includes:
inputting the audio data into a multi-language speech representation model to obtain the audio feature of the audio data, where a training set of the multi-language speech representation model includes audio samples in multiple languages.

According to a second aspect, the present application provides a speaker recognition apparatus, including:
a scene detection module configured to perform scene detection on a video to be recognized, and divide the video to be recognized into a plurality of video segments based on a result of the scene detection;
an audio and video separation module configured to, for each video segment in the plurality of video segments, separate the video segment to obtain audio data and video frames in the video segment;
a first feature extraction module configured to extract facial features of the video frames and an audio feature of the audio data;
a second feature extraction module configured to, for a plurality of video frames with scene switching in the plurality of video segments, extract face depth features of the plurality of video frames, and calculate a distance of the face depth features of adjacent video frames in the plurality of video frames so as to obtain a cross-scene distance feature; and
a speaker recognition module configured to recognize a speaker from faces included in the video segments based on the cross-scene distance feature, the facial features and the audio feature.

According to a third aspect, the present application provides an electronic device, including: a memory and at least one processor; where
the memory stores instructions that may be executed by the at least one processor, where the instructions are executed by the at least one processor so as to enable the electronic device to perform the speaker recognition method provided in the first aspect of the present application.

In a fourth aspect, the present application provides a computer-readable storage medium, where the computer-readable storage medium stores computer-executable instructions which, when executed by a processor, implement the speaker recognition method provided in the first aspect of the present application.

In a fifth aspect, the present application provides a computer program product, including a computer program which, when executed by a processor, implements the speaker recognition method provided in the first aspect of the present application.

For the speaker recognition method and apparatus, electronic device, medium, and program product provided in the present application, the video to be recognized is divided into the plurality of video segments through the result of the scene detection of the video to be recognized, the video segments are separated to obtain their audio data and video frames, and the facial features of the video frames and the audio feature of the audio data are extracted; at the same time, for the plurality of video frames across scenes, such as a last frame of a previous video segment and a first frame of a next video segment in the adjacent video segments, the face tracking during scene switching is achieved through the distance between the face depth features of the previous and next frames in different scenes, and the speaker in the video segment is recognized by taking a video segment in the same scene as a unit combined with the facial feature extracted from each video frame in the video segment, the corresponding audio feature, and the result of cross-scene face tracking, thereby achieving speaker recognition throughout the entire video. The influence of scene switching on speaker recognition is overcome by performing speaker recognition scene by scene, and the speaker recognition is implemented by using matching result of the audio feature and the extracted visual features from two dimensions including both the same scene and cross scene, thereby improving the recognition accuracy.

### BRIEF DESCRIPTION OF THE DRAWINGS

The accompanying drawings herein, which are incorporated into the specification and form a part of the specification, illustrate embodiments in accordance with the present application and are configured to explain the principles of the present application together with the specification.
FIG. 1 is a schematic flowchart of a major process of a speaker recognition method.
FIG. 2 is a schematic flowchart of a speaker recognition method according to an embodiment of the present application.
FIG. 3 is a schematic flowchart of another speaker recognition method according to an embodiment of the present application.
FIG. 4 is a schematic diagram of a processing process of adjacent video frames of different scenes according to an embodiment of the present application.
FIG. 5 is a schematic diagram of a connection relationship of face boxes in different video frames according to an embodiment of the present application.
FIG. 6 is a schematic diagram of a speaker recognition network model according to an embodiment of the present application;
FIG. 7 is a schematic flowchart of still another speaker recognition method according to an embodiment of the present application.
FIG. 8 is a schematic flowchart of yet another speaker recognition method according to an embodiment of the present application.
FIG. 9 is a schematic structural diagram of a speaker recognition apparatus according to an embodiment of the present application.
FIG. 10 is a schematic structural diagram of an electronic device according to an embodiment of the present application.

Through the above accompanying drawings, the specific embodiments of the present application have been shown, and more detailed descriptions will be provided in the following text. These accompanying drawings and the textual descriptions are not intended to limit the scope of the present application in any way, but rather to describe the concept of the present application for those skilled in the art by referring to the specific embodiments.

### DESCRIPTION OF EMBODIMENTS

Exemplary embodiments will be described in detail herein, and the examples thereof are illustrated in the accompanying drawings. When referring to the accompanying drawings, unless otherwise indicated, the same numbers in different drawings represent the same or similar elements. The embodiments described in the following exemplary embodiments do not represent all embodiments consistent with the present application. On the contrary, they are merely examples of apparatuses and methods consistent with some aspects of the present application as detailed in the appended claims.

The widespread dissemination of multimedia short videos has promoted the development and growth of social media platforms. It has significant application value to retrieve the required or relevant multimedia content from massive amounts of audio and video information in activities such as content expression, material creation and social interaction. Speaker recognition is a key technology in audio and video information retrieval. Taking a multi-person conversation video as an example, extracting the audio and video of a speaker from the multi-person conversation video is an important basic technology for processing the multi-person conversation video.

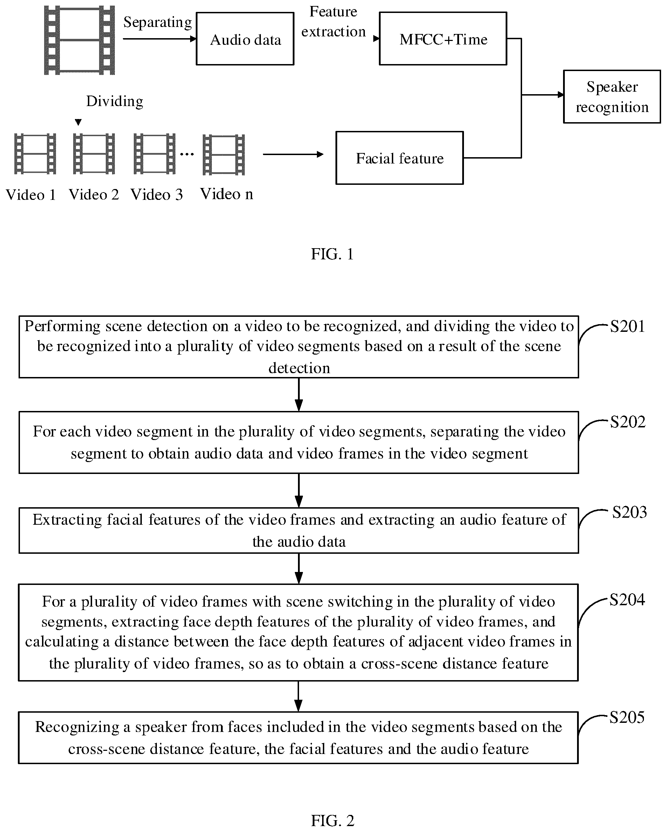

FIG. 1 is a schematic flowchart of a main process of a speaker recognition method. As shown in FIG. 1, for a video of the speaker to be recognized (referred to as video to be recognized), the speaker recognition method includes: obtaining audio data in the video to be recognized firstly by separating the video; extracting an MFCC (Mel Frequency Cepstrum Coefficient) feature of the audio data, and taking a two-dimensional feature composed of a MFCC feature and time as an audio feature; dividing the video to be recognized into a plurality of single-person speech videos such as video 1 to video n in FIG. 1 by inputting the entire video to be recognized into a deep learning network model or methods such as face clustering so as to extract facial features of a plurality of continuous video frames of the single-person speech videos; and achieving speaker recognition through matching result of the facial features and audio features.

The above speaker recognition method has the following shortcomings: since the total number of speakers is unknown, there is certain difficulty in dividing into the single-person speech videos, and the detection error is large; when facing scenes where the speakers frequently switch, the MFCC feature may not be extracted accurately; and when facing scenes where the speakers frequently switch and the speakers move, the single-person speech video analysis is performed by using the entire video as an object, which is affected by frequent scene switching, and has poor segmentation accuracy, resulting in poor speaker recognition accuracy.

In order to solve the problem of poor speaker recognition accuracy in the multi-person conversation video, the present application provides a speaker recognition method which includes: performing scene detection on the video to be recognized firstly and dividing the video to be recognized into a plurality of video segments based on a result of the scene detection, where the scenes of adjacent video segments are different; performing feature extraction by taking the video segment as an object subsequently, so as to separate the video segment to obtain audio data and each video frame in the video segment firstly and then to extract a facial feature of the video frame and an audio feature of the audio data; at the same time, for adjacent video frames across scenes, achieving cross-scene face tracking through a distance between face depth features before and after scene switching, and achieving the speaker recognition through a result of the cross-scene face tracking as well as the facial feature and the audio feature extracted from the video segment. By performing speaker recognition in different scenes and cross-scene face tracking, the impact of scene switching on the speaker recognition is effectively overcome, and the speaker recognition accuracy is improved.

The technical solution of the present application and how the technical solution of the present application solves the above technical problems will be described in detail below with reference to specific embodiments. The following several specific embodiments may be combined with each other, and the same or similar concepts or procedures may not be repeated in certain embodiments. The embodiments of the present application will be described below with reference to the accompanying drawings.

FIG. 2 is a schematic flowchart of a speaker recognition method according to an embodiment of the present application. The speaker recognition method can be executed by an electronic device with a corresponding data processing capability, such as a speaker recognition device, which can be a computer, a server or other electronic devices. As shown in FIG. 2, the speaker recognition method includes the following steps S201-S205.

Step S201: performing scene detection on a video to be recognized, and dividing the video to be recognized into a plurality of video segments based on a result of the scene detection.

The video to be recognized may be a multi-person conversation video, and the video to be recognized includes a plurality of faces and a plurality of speakers.

The scene detection determines whether the plurality of video frames belong to the same scene by comparing a portion that changes between a plurality of consecutive video frames in the video to be recognized or by evaluating a similarity between the plurality of video frames.

The result of the scene detection may include serial numbers of video frames where scene switching occurs, so that the video to be recognized is divided into a plurality of video segments through the serial numbers, where the scenes of the video frames included in each video segment are the same, while the scenes corresponding to adjacent video segments are different.

Exemplarily, if the video to be recognized includes 10 video frames, i.e., f1 to f10, and the video frames where scene switching occurs are numbered 3, 5, and 8 in sequence, the video to be recognized may be divided into four video segments, where a first video segment includes f1 and f2, a second video segment includes f3 and f4, a third video segment includes f5, f6, and f7, and a fourth video segment includes f8, f9, and f10.

The result of the scene detection may further include a serial number of a maximum video frame where no scene switching occurs. Taking the video to be recognized that includes video frames f1 to f10 in the foregoing embodiment as an example, if the recorded numbers of the result of the scene detection are 3, 5, and 8 in sequence, the video to be recognized may be divided into four video segments, where the first video segment includes fl, f2, and f3, the second video segment includes f4 and f5, the third video segment includes f6, f7, and f8, and the fourth video segment includes f9 and f10.

Exemplarily, the scene detection may be performed on the video to be recognized based on a depth learning algorithm, so as to automatically recognize different scenes in the video to be recognized, such as different scenes caused by personnel entering and leaving, camera movements, etc.

The scene detection can be performed on the video to be recognized by using any scene detection algorithm, such as a machine learning algorithm and a histogram comparison method, which is not limited in the present application.

Step S202: for each video segment in the plurality of video segments, separating the video segment to obtain audio data and video frames in the video segment.

After the video to be recognized is divided into the plurality of video segments through the scene detection, for each video segment, the audio data and the video frames in the video segment are obtained by separating it, that is, audio and video separation is performed on the video segment to obtain the audio data and the video frames corresponding to the video segment.

The audio data in each video segment may be separated by using a video editing tool, software, or an online tool to obtain the audio data and the video frames corresponding to the video segment.

Step S203: extracting facial features of the video frames and extracting an audio feature of the audio data.
for each video frame in each video segment, extracting the facial feature in the video frame; and for the audio data corresponding to each video segment, extracting the audio feature of the audio data.

The extracted facial feature in the video frame is a feature expression of a facial ID (Identification), and is a biological feature of the face.

When the facial feature is extracted, a face box in the video frames may be recognized first by using a face box detection algorithm, and then the facial feature of the face in the recognized face box is extracted, such as a facial key point feature.

The facial feature of the face that appears in the video frame can be extracted by any type of facial feature extractor. The facial feature extractor may be an ArcFace model, a VGGFace model, a FaceNet model, a Mobile FaceNet model, etc.

Exemplarily, the facial feature may include a MIOU (Mean Intersection over Union) feature of a normalized and aligned face box. The identical face between video frames may be recognized through the MIOU feature.

The audio feature of the audio data may be an MFCC feature, and may also be a wav2vec feature.

For the consecutive video frames in the same scene, that is, the plurality of continuous video frames in the same video segment, the MIOU feature is used as a signal for distinguishing the facial ID, so as to realize face tracking in different video frames; and for the consecutive video frames in different scenes, that is, the plurality of continuous video frames in adjacent video segments, in addition to extracting the MIOU feature, it is also necessary to consider face depth features of the same face before and after scene switching, so as to realize more accurate face tracking.

Step S204: for a plurality of video frames with scene switching in the plurality of video segments, extracting face depth features of the plurality of video frames, and calculating a distance between the face depth features of adjacent video frames in the plurality of video frames, so as to obtain a cross-scene distance feature.

The face depth feature is configured to describe depth information of the face box, and may be represented by using depth of key points on the face, for example, the key points on the mouth, nose, eyes, and other parts.

Exemplarily, the face depth feature may be extracted by using a Mobile FaceNet model.

The distance of the face depth feature may be a cosine distance of the face depth feature.

For adjacent video frames with different scenes, in addition to extracting the facial features of the video frames, it is also necessary to extract face depth features in the video frames before and after scene switching.

For the adjacent video frame with scene switching, that is, the last video frame of the previous video segment and the first video frame of the next video segment, the distance between the face depth features of the two video frames is calculated to obtain the cross-scene distance feature.

Through the cross-scene distance feature, the face tracking during scene switching can be achieved so as to establish a connection relationship of face boxes extracted from the adjacent video frames with scene switching, where the face boxes connected in different video frames correspond to the same face.

Step S205: recognizing a speaker from faces included in the video segments based on the cross-scene distance feature, the facial features and the audio feature.

Specifically, based on the extracted facial features and the cross-scene distance features, the face tracking in adjacent video frames of the same scene and the cross-scene is achieved so as to obtain the connection relationship of the same face box in different video frames. For each face box, a facial feature sequence corresponding to the face box is obtained by separating from the facial features extracted from each video frame in the video segment. Based on the matching result between the facial feature sequence corresponding to each face box extracted from the video segment and the audio feature, respectively, the face box of the speaker is determined from the face boxes extracted from the video segment, that is, the speaker is recognized.

In the speaker recognition method provided in this embodiment, the video to be recognized is divided into the plurality of video segments through the result of the scene detection of the video to be recognized, the video segments are separated to obtain their audio data and video frames, and the facial feature of each video frame and the audio feature of the audio data are extracted. At the same time, for the plurality of video frames across scenes, such as the last frame of the previous video segment and the first frame of the next video segment in the adjacent video segments, the face tracking during scene switching is achieved through the distance of the face depth features between the previous and next frames in different scenes, and the speaker in the video segment is recognized by taking video segments in the same scene as a unit combined with the facial feature extracted from each video frame in the video segment, the corresponding audio features, and the result of cross-scene face tracking, thereby achieving speaker recognition throughout the entire video. The influence of scene switching on speaker recognition is overcome by performing speaker recognition scene by scene, and the speaker recognition is implemented by using matching result of the audio feature and the extracted visual features from two dimensions including both the same scene and cross scene, thereby improving the recognition accuracy.

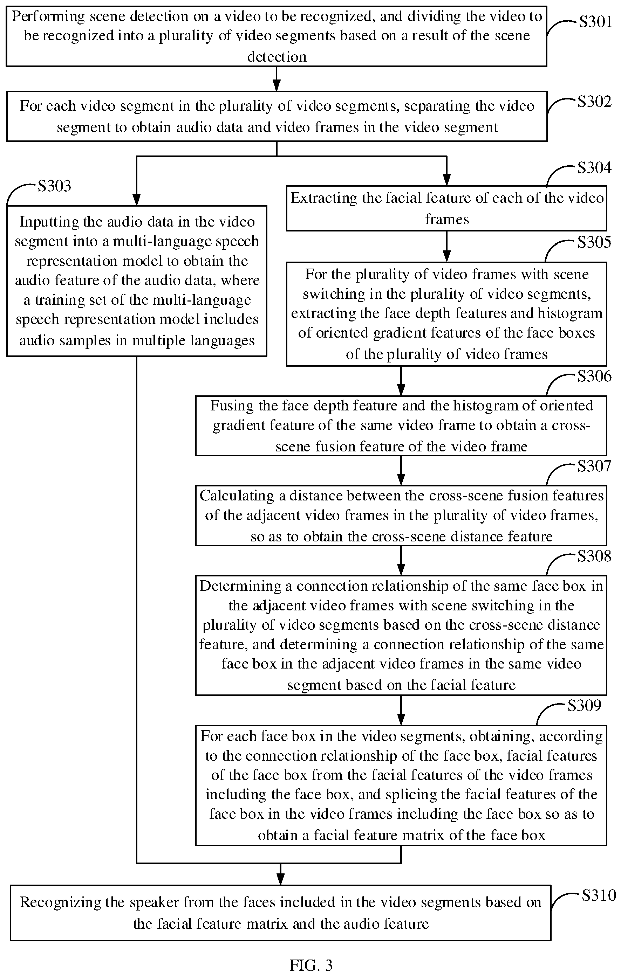

FIG. 3 is a schematic flowchart of another speaker recognition method according to an embodiment of the present application. This embodiment further refines steps S203 to S205 according to the embodiment shown in FIG. 2. As shown in FIG. 3, the speaker recognition method provided in this embodiment may specifically include the following steps S301-S308.

Step S301: performing scene detection on a video to be recognized, and dividing the video to be recognized into a plurality of video segments based on a result of the scene detection.

Step S302: for each video segment in the plurality of video segments, separating the video segment to obtain audio data and video frames in the video segment.

Before separating the audio data from the video segment, the background sound in the video segment may also be removed first, so as to avoid the impact of the background sound on the feature expression of the audio data.

Step S303: inputting the audio data in the video segment into a multi-language speech representation model to obtain the audio feature of the audio data, where a training set of the multi-language speech representation model includes audio samples in multiple languages.

In order to satisfy the issue of multi-language applicability, the multi-language speech representation model is introduced to encode the audio data. The multi-language speech representation model has an encoding capability for cross-lingual audio data, and multi-language audio samples thereof can be obtained through publicly available large corpora.

The audio feature may be a wav2vec feature. Compared with a conventional MFCC feature, the wav2vec feature can better adapt to a multi-language scene, and can achieve speaker recognition of the multi-person conversation video in different languages.

Step S304: extracting the facial feature of each of the video frames.

The facial feature includes the features of the face box, such as a serial number, a position, a facial key point feature, and a MIOU feature of the aligned face boxes in the adjacent video frames. The MIOU feature may be configured to achieve face tracking in the video frames of the same scene, that is, to achieve face tracking in video segments.

The face box in the video frame may be extracted by using a face box detection algorithm so as to obtain information such as the position and the serial number of the face box. The facial key point feature of the face in the face box is extracted by using a face key detection network model, such as a MTCNN model or a RetinaFace model, etc.

Step S305: for the plurality of video frames with scene switching in the plurality of video segments, extracting the face depth features and histogram of oriented gradient features of the face boxes of the plurality of video frames.

For the adjacent video frames with scene switching, the face depth feature of the face box included in each video frame in the adjacent video frames and the histogram of oriented gradient (HOG) feature of the face box included in each video frame in the adjacent video frames are extracted.

Step S306: fusing the face depth feature and the histogram of oriented gradient feature of the same video frame to obtain a cross-scene fusion feature of the video frame.

The feature fusion is performed on the face depth feature and the HOG feature extracted from the same video frame, so as to obtain a feature matrix, i.e. a cross-scene fusion feature.

Step S307: calculating a distance between the cross-scene fusion features of the adjacent video frames in the plurality of video frames, so as to obtain the cross-scene distance feature.

Specifically, the distance between the cross-scene fusion features in adjacent video frames with scene switching, such as cosine distance and Euclidean distance, etc., may be calculated to obtain the cross-scene distance feature.

Step S308: determining a connection relationship of the same face box in the adjacent video frames with scene switching in the plurality of video segments based on the cross-scene distance feature, and determining a connection relationship of the same face box in the adjacent video frames in the same video segment based on the facial feature.

The connection relationship of face box is used to describe a position relationship of the same face box in different video frames, where the same face box is a face box of the same face, such as a face box with the same serial number.

For the adjacent video frames with the same scene, that is, the video frames in the same video segment, the connection relationship of the face box representing the same face in the adjacent video frames may be determined by the MIOU feature of the aligned face box in the adjacent video frames in the same video segment.

For adjacent video frames with different scenes, that is, the adjacent video frames in different video segments, the connection relationship of the face box representing the same face in the adjacent video frames may be determined according to a matching result of the cross-scene distance feature of the adjacent video frames.

Optionally, the determining the connection relationship of the same face box in the adjacent video frames with scene switching in the plurality of video segments based on the cross-scene distance feature, includes:
performing a Hungarian matching on the cross-scene distance feature of the adjacent video frames with scene switching in the plurality of video segments, so as to obtain the connection relationship of the same face box in the adjacent video frames with scene switching in the plurality of video segments.

Specifically, the connection relationship of the face box representing the same face in the adjacent video frames may be determined based on the Hungarian matching result of the cross-scene distance feature of the adjacent video frames.

The Hungarian matching algorithm can determine, based on the cross-scene distance features of two video frames, the face box matching the two video frames, that is, the face box representing the same face.

By using the Hungarian matching to perform the cross-scene face tracking, the comprehensiveness and accuracy of the tracking are improved.

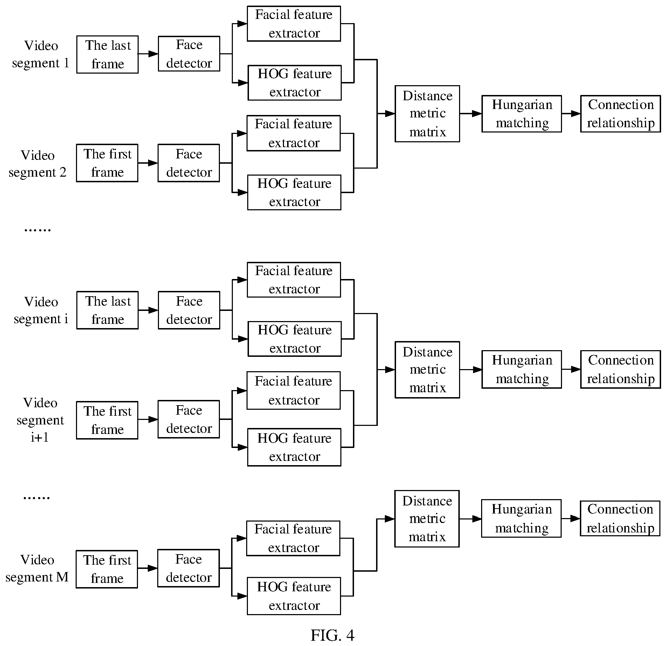

FIG. 4 is a schematic diagram of a processing process of adjacent video frames of different scenes according to an embodiment of the present application. As shown in FIG. 4, the video to be recognized is divided into M (taking M as an even number in FIG. 4) video segments through scene detection, that is, video segment 1 to video segment M. For the adjacent video segments such as the i-th video segment and the i+1-th video segment, the last video frame (referred to as the last frame) of the i-th video segment and the first video frame (referred to as the first frame) of the i+1-th video segment are adjacent video frames. For each video frame in the adjacent video frames, the face box in the video frame is extracted by using a face detector. With regard to the extracted face box, the facial ID feature and the face depth feature in the face box are extracted by the facial feature extractor, and the HOG feature of the face box is extracted by a HOG feature extractor. After the feature fusion is performed on the extracted face ID feature, the face depth feature and the HOG feature of the face box, a cosine distance is calculated so as to obtain a distance metric matrix, i.e. the cross-scene distance feature, of the adjacent video frames. By the Hungary matching of the cross-scene distance feature, the connection relationship of the face box in the adjacent video frames is obtained, thereby achieving cross-scene face tracking.

By introducing the face depth feature and the HOG feature, the face tracking can be achieved in scenes such as facial occlusion, side face and transitions, thereby improving the stability of face tracking.

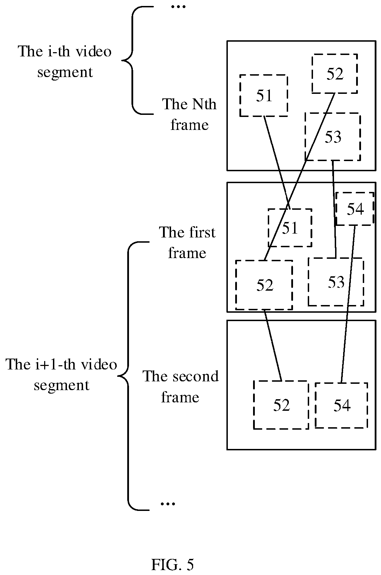

Exemplarily, FIG. 5 is a schematic diagram of a connection relationship of face boxes in different video frames according to an embodiment of the present application, As shown in FIG. 5, the i-th video segment includes N video frames, where the last video frame of the i-th video segment, i.e. the Nth frame, and the first video frame of the i+1-th video segment, i.e. the 1st frame, are the adjacent video frames of different scenes, and the cross-scene distance feature is used to establish the connection relationships of face boxes in the two video frames, i.e. the connection relationships of the face box 51 and the face box 53, where the face boxes connected by straight lines are the same face box, corresponding to the same face. The first video frame and the second video frame, i.e. the second frame, of the i+1 video segment are the adjacent video frames with the same scene, and the MIOU feature is used to establish the connection relationship of face boxes in the two video frames, i.e. the connection relationships of the face box 52 and the face box 54. In a similar fashion, by continuously extending the connection relationships of the face boxes, the connection relationships of face boxes in the entire video segment or even in the entire video to be recognized can be achieved.

Step S309: for each face box in the video segments, obtaining facial features of the face box from the facial features of the video frames including the face box according to the connection relationship of the face box, and splicing the facial features of the face box in the video frames including the face box so as to obtain a facial feature matrix of the face box.

The facial feature matrix of the face box is used to describe the changes in the facial feature of the face box in the video segment, including the changes in the facial mouth key point.

Specifically, for a certain face box recognized in a certain video segment, according to the connection relationship of the face box, the facial feature of the face box in each video frame including the face box in the video fragment is sequentially extracted, such as a facial key point feature, where the facial key point includes a plurality of key points on the mouth. The extracted facial features of the face box are spliced in the order of video frames or time so as to obtain the facial feature matrix of the face box.

Step S310: recognizing the speaker from the faces included in the video segments based on the facial feature matrix and the audio feature.

Specifically, for each face box detected in the video segment, the facial feature matrix of the face box and the audio feature of the audio data corresponding to the video segment are input into the speaker recognition network model, and the speaker recognition network model identifies the face box of the speaker from the face boxes included in the video segment. Since different face boxes correspond to different faces, the speaker can be recognized by recognizing the face box of the speaker.

The speaker recognition network model may analyze to obtain a mouth shape change feature of the face in the face box based on the input facial feature matrix of the face box, and then determine whether the face in the face box is the speaker according to the matching result between the mouth shape change feature and the audio feature.

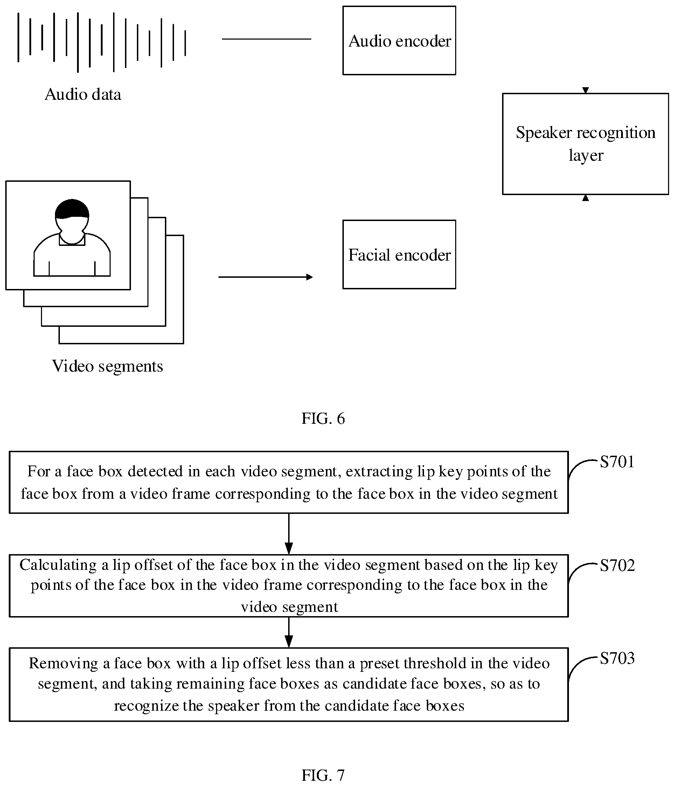

FIG. 6 is a schematic diagram of a speaker recognition network model according to an embodiment of the present application. As shown in FIG. 6, the speaker recognition network model may include an audio coder, a facial coder, and a speaker recognition layer, where the audio encoder is configured to encode the audio data of the input video segment to obtain the audio feature, the facial encoder is configured to encode each face box included in each video frame in the video segment so as to obtain the facial feature matrix of each face box, and the speaker recognition layer is configured to determine the face box of the speaker from face boxes detected by the video segment based on the input audio feature and human facial feature matrix. The speaker recognition network model can calculate the probability of each face box detected in video segment being the face box of the speaker based on the audio feature and the human facial feature matrix, and determine the face box with the highest probability as the face box of the speaker.

In order to extend the training set when the speaker recognition network model is trained, a comparison learning framework can be used to train the speaker recognition network model. The model is trained by maximizing the consistency between positive samples and minimizing the consistency between negative samples, so as to continuously optimize the model parameters.

In a training set collection stage of the speaker recognition network model, a plurality of video samples can be acquired from public video materials, such as news simulcast, where the plurality of video samples can include a plurality of languages. The scene detection is performed on the video samples so as to divide them into a plurality of video segment samples. The audio data and video frames in the video segment samples are separated. The positive samples in the training samples can be obtained from the audio data and the video frames separated from the video segment samples by human labor. The audio data in the negative samples can be obtained by translating the audio data of the positive samples into other languages, or by replacing the audio data in the positive samples with the audio data in other positive samples.

In this embodiment, the multi-language speech representation model is used to extract the audio feature of the audio data, so as to achieve speech feature expression in a multi-language scene, thereby enabling speaker recognition in a cross-language multi-person conversation video, and expanding the application scope. In addition to the biological feature of the face, the cross-scene face tracking is achieved by combining the depth feature and the HOG feature of the face, which effectively overcomes the problem of poor accuracy in face tracking in scenes where the face moves significantly, such as the front face being changed to the side face and the face occlusion, thereby improving the stability of face tracking and enhancing the accuracy of speaker recognition.

FIG. 7 is a schematic flowchart of still another speaker recognition method according to an embodiment of the present application. Based on the foregoing embodiments, this embodiment adds some relevant steps of screening the face box based on the facial key points before step S205 or step S310. As shown in FIG. 7, the speaker recognition method provided in this embodiment may further include the following steps S701-S703 before recognizing the speaker from the faces included in the video segment.

Step S701, for a face box detected in each video segment, extracting lip key points of the face box from a video frame corresponding to the face box in the video segment.

For each face box detected in the video segment, the positions of the lip key points of the face box are extracted from the video frame including the face box in the video segment.

If the facial feature extracted in the foregoing step includes the positions of the lip key points, then the step can be adjusted to extract the positions of the lip key points from the extracted facial feature of the face box.

The lip key points include a plurality of key points located on the lip, such as a key point on an outer edge line of the upper lip, a key point on an outer edge line of the lower lip, etc. The lip key points further include a key point on an inner edge line of the upper lip and a key point on an inner edge line of the lower lip.

Step S702: calculating a lip offset of the face box in the video segment based on the lip key points of the face box in the video frame corresponding to the face box in the video segment.

Specifically, the offsets of one or more lip key points or the overall lip key point specified by a certain face box in the video segment may be calculated in a time sequence, and the lip offset of the face box in the video segment is obtained based on a statistical value of the calculated offsets, such as an average value and a maximum value.

Exemplarily, the lip offset of a face box in the video fragment may be an offset of the lip key point of the face box with a maximum offset in the video fragment.

Step S703: removing a face box with a lip offset less than a preset threshold in the video segment, and taking remaining face boxes as candidate face boxes, so as to recognize the speaker from the candidate face boxes.

If the lip offset of the face box in the video fragment is less than the preset threshold value, the face box will be deleted.

After deleting the face box with the lip offset less than the preset threshold value in the video segment, the remaining face boxes are taken as the candidate face boxes, so as to recognize the speaker from the candidate face boxes of the video segment.

By using the lip offset to screen the face boxes before recognizing the speaker, the number of face boxes required to be recognized is reduced, and the efficiency of speaker recognition is improved.

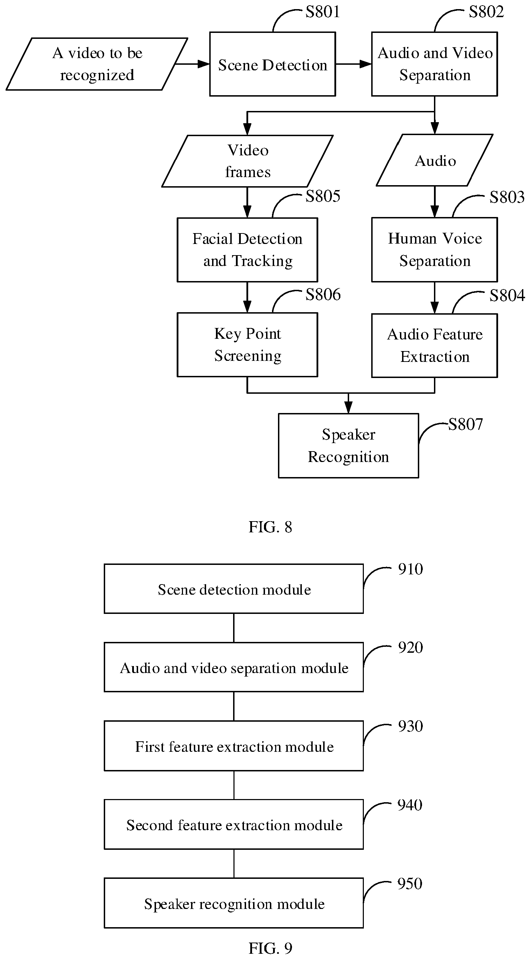

FIG. 8 is a schematic flowchart of yet another speaker recognition method according to an embodiment of the present application. As shown in FIG. 8, the speaker recognition method mainly includes the following steps:
Step S801, Scene Detection: performing scene detection on a video to be recognized provided by the user, and dividing the video to be recognized into a plurality of video segments based on a result of the scene detection.
Step S802, Audio and Video Separation: for each video segment, separating it to obtain audio data (referred to as audio) and video frames in the video segment.
Step S803, Human Voice Separation: for the audio data, separating background sound therein so as to achieve a separation of human voice and the background sound.
Step S804: Audio Feature Extraction: performing feature extraction on the separated human voice to obtain an audio feature, such as a wav2vec feature.
Step S805: Facial Detection and Tracking: performing facial detection on the video frames to obtain face boxes in the video frames and the facial key point features within the face boxes; and determining a connection relationship of the face boxes by using a face tracking algorithm.

Specifically, the MIOU feature in the aligned face boxes can be used to establish the connection relationship of face boxes between the video frames of the same scene, and the MIOU feature, the face depth feature, and the HOG feature in the face boxes can be used to establish the connection relationship of face boxes between the video frames of different scenes.

Step S806, Key Point Screening: screening the face boxes by using offsets of the lip key points in the face boxes and taking the video segment as a unit.

Step S807, Speaker Recognition: for the remaining face boxes after screening in the video segment, i.e. the candidate face boxes, obtaining a time sequence, i.e. a facial feature matrix of the face boxes, by splicing the facial key point features in the face boxes, and recognizing the speaker from the remaining face boxes after screening in the video segment.

Furthermore, after recognizing the speaker in the video, speaker labeling can be performed in the video, i.e. labeling is performed so as to obtain the time periods corresponding to different speakers, so that, based on a preset speaker input by the user, the video can be clipped to obtain video clips where only the preset speaker is speaking, that is, the video clips of the time periods corresponding to the preset speaker can be obtained from the video by clipping.

Furthermore, after recognizing the speaker in the video, it is also possible to modify the mouth shape of the corresponding face in the video based on the speaker corresponding to each segment in a translated audio after the audio in the video is replaced with the translated audio, thereby preventing the translated audio from being inconsistent with the mouth shape in the video pictures.

FIG. 9 is a schematic structural diagram of a speaker recognition apparatus according to an embodiment of the present application. As shown in FIG. 9, the speaker recognition apparatus includes a scene detection module 910, an audio and video separation module 920, a first feature extraction module 930, a second feature extraction module 940, and a speaker recognition module 950.

The scene detection module 910 is configured to perform scene detection on a video to be recognized, and to divide the video to be recognized into a plurality of video segments based on a result of the scene detection. The audio and video separation module 920 is configured to, for each video segment in the plurality of video segments, separate the video segment to obtain audio data and video frames in the video segment. The first feature extraction module 930 is configured to extract facial features of the video frames and extract an audio feature of the audio data. The second feature extraction module 940 is configured to, for a plurality of video frames with scene switching in the plurality of video segments, extract face depth features of the plurality of video frames, and calculate a distance of the face depth features of the adjacent video frames in the plurality of video frames so as to obtain a cross-scene distance feature. The speaker recognition module 950 is configured to recognize a speaker from faces included in the video segments based on the cross-scene distance feature, the facial features and the audio feature.

Optionally, the second feature extraction module 940 includes:
a depth feature and HOG extraction unit configured to, for the plurality of video frames with scene switching in the plurality of video segments, extract the face depth features and histogram of oriented gradient features of the face boxes of the plurality of video frames; a feature fusion unit configured to fuse the face depth feature and the histogram of oriented gradient feature of the same video frame to obtain a cross-scene fusion feature of the video frame; and a distance calculation unit configured to calculate a distance of the cross-scene fusion features of the adjacent video frames in the plurality of video frames so as to obtain the cross-scene distance feature.

Optionally, the facial features are configured to describe the features of the face boxes corresponding to the faces included in the video frames, and the speaker recognition module 950 includes:
a cross-scene connection relationship determination unit configured to determine, based on the cross-scene distance feature, a connection relationship of the same face box in the adjacent video frames with scene switching in the plurality of video segments, where the connection relationship of the face box is configured to describe the positional relationship of the same face box in different video frames; a same scene connection relationship determination unit configured to determine, based on the facial feature, a connection relationship of the same face box in adjacent video frames in the same video segment; a face box feature obtainment unit configured to obtain, for each face box in the video segments, facial features of the face box from the facial features of the video frames including the face box according to the connection relationship of the face box, and to splice the face features of the face box in the video frames including the face box so as to obtain a facial feature matrix of the face box; and a speaker recognition unit configured to recognize the speaker from the faces included in the video segment based on the facial feature matrix and the audio feature.

Optionally, the cross-scene connection relationship determination unit is specifically configured to:
perform a Hungarian matching on the cross-scene distance feature of the adjacent video frames with scene switching in the plurality of video segments, so as to obtain the connection relationship of the same face box in the adjacent video frames with scene switching in the plurality of video segments.

Optionally, the facial features are configured to describe the features of the face boxes corresponding to the faces included in the video frame, and the speaker recognition module 950 further includes a face box screening module configured to:
before recognizing the speaker from the faces included in the video segment based on the cross-scene distance feature, the facial features and the audio feature, for a face box detected in each video segment, extract lip key points of the face box from a video frame corresponding to the face box in the video segment; calculate, based on the lip key points of the face box in the video frame corresponding to the face box in the video segment, a lip offset of the face box in the video segment; and remove a face box with a lip offset less than a preset threshold value in the video segment, and take remaining face boxes as candidate face boxes so as to recognize the speaker from the candidate face boxes.

Optionally, when extracting the audio feature of the audio data, the first feature extraction module 930 is specifically configured to:
input the audio data into a multi-language speech representation model, so as to obtain the audio feature of the audio data, where a training set of the multi-language speech representation model includes audio samples in multiple languages.

The facial model correction apparatus provided in the embodiments of the present application can be used to execute the technical solution of the facial model correction method provided in any one of the above embodiments of the present application. The implementation principle and the technical effect thereof are similar, and will not be repeatedly described herein in this embodiment.

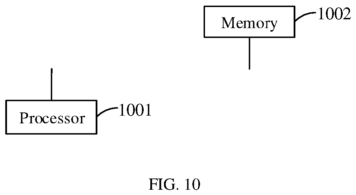

FIG. 10 is a schematic structural diagram of an electronic device according to an embodiment of the present application. As shown in FIG. 10, the electronic device in this embodiment may include at least one processor 1001 and a memory 1002 that is communicatively connected to the at least one processor, where the memory 1002 stores instructions that can be executed by the at least one processor 1001, and the instructions are executed by the at least one processor 1001 so as to enable the electronic device to execute the method according to any one of the foregoing embodiments.

Optionally, the memory 1002 may be independent or integrated with the processor 1001.

The implementation principle and technical effect of the electronic device provided in this embodiment, reference can refer to the foregoing embodiments, and will not be repeatedly described herein.

The embodiments of the present application further provide a computer-readable storage medium which stores computer execution instructions. When the computer execution instructions are executed by a processor, the method provided in any one of the foregoing embodiments can be implemented.

The embodiments of the present application further provide a computer program product, including a computer program. The computer program implements the method provided in any one of the foregoing embodiments when executed by the processor.

In the several embodiments provided in the present application, it should be understood that the disclosed devices and methods may be implemented in other manners. For example, the device embodiments described above are merely exemplary. For example, the division of the modules is merely a logical function division, and may be other division methods in actual implementation, such as a plurality of modules being combined or integrated into another system, or some features being ignored or not executed.

The integrated module implemented in the form of software functional modules may be stored in the computer-readable storage medium. The software function modules are stored in a storage medium, and include several instructions to enable a computer device (which may be a personal computer, a server, or a network device) or a processor to perform some steps of the methods described in the various embodiments of the present application.

It should be understood that the foregoing processor may be a central processing unit CPU for short), and may also be another general-purpose processor, a digital signal processor (DSP for short), an application specific integrated circuit (ASIC for short), etc. The general-purpose processor may be a microprocessor, or may also be any conventional processor. The steps of the method disclosed in the application may be directly executed by a hardware processor, or may be executed by using a combination of hardware and software modules in the processor. The memory may include a high-speed memory, and may also include a non-volatile memory, such as at least one disk memory, and may also be a USB disk, a removable hard disk, a read-only memory, a magnetic disk, or an optical disk.

The above-mentioned storage medium may be implemented by any type of volatile or non-volatile storage device or a combination thereof, such as a static random access memory, an electrically erasable programmable read-only memory, an erasable programmable read-only memory, a programmable read-only memory, a read-only memory, a magnetic memory, a flash memory, a magnetic disk, or an optical disk. The storage medium may be any available media that can be accessed by a general-purpose or special-purpose computer.

An exemplary storage medium is coupled to the processor, so that the processor can read information from and write information to the storage medium. Of course, the storage medium may also be a component of the processor. The processor and the storage medium may be located in the application-specific integrated circuit. Of course, the processor and the storage medium may also be present as separate components in the electronic device or a control device in a vehicle sentinel mode.

It should be noted that in this specification, the terms "include", "comprise", or any other variation thereof are intended to encompass a non-exclusive inclusion, so that a process, a method, an object, or an apparatus that includes a series of elements not only includes those elements, but also includes other elements that are not explicitly listed, or further includes inherent elements to the process, the method, the object, or the apparatus. An element limited by the statement "including a ......" does not exclude the existence of other identical elements in the process, method, article, or device that includes the element, unless otherwise specifically defined.

The serial numbers of the embodiments of the present application are only for description, and do not represent the preference of the embodiments.

Through the description of the foregoing embodiments, those skilled in the art may clearly understand that the methods in the foregoing embodiments may be implemented through software and a necessary general hardware platform, and definitely may also be implemented by hardware. However, in many cases, the former is the better embodiment. Based on this understanding, the technical solutions of the present application may be essentially embodied, or the part contributing to the prior art may be embodied, in the form of a software product. The computer software product is stored in a storage medium (such as a ROM/RAM, a magnetic disk, and an optical disk), and includes several instructions to enable a terminal device (which may be a mobile phone, a computer, a server, or a network device, etc.) to execute the methods provided in various embodiments of the present application.

Those skilled in the art from will easily come up with other embodiments of the present application after considering the specification and practicing the invention disclosed herein. The present application is intended to cover any variations, uses, or adaptive changes of the present application, and these variations, uses, or adaptive changes follow the generic principles of the present application and include common general knowledge or customary technical means in the technical field not disclosed in the present application. The specification and embodiments are only considered exemplary, and the true scope of the present application is indicated by the following claims.

It should be understood that the present application is not limited to the precise structure described above and shown in the drawings, and that various modifications and changes may be made without departing from the scope thereof. The scope of the present application is only limited by the appended claims.

## Claims

1. A speaker recognition method, comprising:
performing (S201) scene detection on a video to be recognized, and dividing the video to be recognized into a plurality of video segments based on a result of the scene detection;
for each video segment in the plurality of video segments, separating (S202) the video segment to obtain audio data and video frames in the video segment;
extracting (S203) facial features of the video frames and extracting an audio feature of the audio data;
for a plurality of video frames with scene switching in the plurality of video segments, extracting (S204) face depth features of the plurality of video frames, and calculating a distance between the face depth features of adjacent video frames in the plurality of video frames, so as to obtain a cross-scene distance feature; and
recognizing (S205) a speaker from faces comprised in the video segments based on the cross-scene distance feature, the facial features and the audio feature.

2. The speaker recognition method according to claim 1, wherein the for the plurality of video frames with scene switching in the plurality of video segments, extracting (S204) the face depth features of the plurality of video frames, and calculating the distance between the face depth features of the adjacent video frames in the plurality of video frames so as to obtain the cross-scene distance feature, comprises:
for the plurality of video frames with scene switching in the plurality of video segments, extracting (S305) the face depth features and histogram of oriented gradient features of face boxes of the plurality of video frames;
fusing (S306) the face depth feature and the histogram of oriented gradient feature of the same video frame to obtain a cross-scene fusion feature of the video frame; and
calculating (S307) a distance between the cross-scene fusion features of the adjacent video frames in the plurality of video frames, so as to obtain the cross-scene distance feature.

3. The speaker recognition method according to claims 1 or 2, wherein the facial features are configured to describe features of the face boxes corresponding to the faces comprised in the video frames, and the recognizing (S205) the speaker from the faces comprised in the video segments based on the cross-scene distance feature, the facial features and the audio feature, comprises:
determining (S308) a connection relationship of the same face box in the adjacent video frames with scene switching in the plurality of video segments based on the cross-scene distance feature, and determining a connection relationship of the same face box in the adjacent video frames in the same video segment based on the facial feature; wherein the connection relationship of the face box is configured to describe a position relationship of the same face box in different video frames;
for each face box in the video segments, obtaining (S309) facial features of the face box from the facial features of the video frames comprising the face box according to the connection relationship of the face box, and splicing the facial features of the face box in the video frames comprising the face box so as to obtain a facial feature matrix of the face box; and
recognizing (S310) the speaker from the faces comprised in the video segments based on the facial feature matrix and the audio feature.

4. The speaker recognition method according to claim 3, the determining (S308) the connection relationship of the same face box in the adjacent video frames with scene switching in the plurality of video segments based on the cross-scene distance feature, comprises:
performing a Hungarian matching on the cross-scene distance feature of the adjacent video frames with scene switching in the plurality of video segments, so as to obtain the connection relationship of the same face box in the adjacent video frames with scene switching in the plurality of video segments.

5. The speaker recognition method according to claims 1 or 2, wherein the facial features are configured to describe features of the face boxes corresponding to the faces comprised in the video frames, and before recognizing (S205) the speaker from the faces comprised in the video segments based on the cross-scene distance feature, the facial features, and the audio feature, the method further comprises:
for a face box detected in each video segment, extracting (S701) lip key points of the face box from a video frame corresponding to the face box in the video segment;
calculating (S702) a lip offset of the face box in the video segment based on the lip key points of the face box in the video frame corresponding to the face box in the video segment; and
removing (S703) a face box with a lip offset less than a preset threshold value in the video segment, and taking remaining face boxes as candidate face boxes so as to recognize the speaker from the candidate face boxes.

6. The speaker recognition method according to claims 1 or 2, the extracting the audio feature of the audio data, comprises:
Inputting (S303) the audio data into a multi-language speech representation model to obtain the audio feature of the audio data, wherein a training set of the multi-language speech representation model comprises audio samples in multiple languages.

7. A speaker recognition apparatus, comprising:
a scene detection module (910) configured to perform scene detection on a video to be recognized, and divide the video to be recognized into a plurality of video segments based on a result of the scene detection;
an audio and video separation module (920) configured to, for each video segment in the plurality of video segments, separate the video segment to obtain audio data and video frames in the video segment;
a first feature extraction module (930) configured to extract facial features of the video frames and an audio feature of the audio data;
a second feature extraction module (940) configured to, for a plurality of video frames with scene switching in the plurality of video segments, extract face depth features of the plurality of video frames, and calculate a distance of the face depth features of adjacent video frames in the plurality of video frames so as to obtain a cross-scene distance feature; and
a speaker recognition module (950) configured to recognize a speaker from faces comprised in the video segments based on the cross-scene distance feature, the facial features and the audio feature.

8. An electronic device, comprising: a memory (1002) and at least one processor (1001); wherein
the memory (1002) stores instructions that may be executed by the at least one processor (1001), wherein the instructions are executed by the at least one processor (1001) so as to enable the electronic device to perform the method according to any one of claims 1-6.

9. A computer-readable storage medium, storing computer-executable instructions which, when executed by a processor, implement the method according to any one of claims 1-6.

10. A computer program product, comprising a computer program which, when executed by a processor, implements the method according to any one of claims 1-6.
